# EUROPEAN PATENT SPECIFICATION

(11) **EP 3 573 876 B1**
(45) Date of publication and mention of the grant of the patent: **11.01.2023**
(21) Application number: 18703185.1
(22) Date of filing: 24.01.2018
(51) Int. Cl.: B62D 5/04, B62D 1/00

(54) **INTEGRATED AUTO-STEER SYSTEM FOR VEHICLE**
INTEGRIERTES AUTOMATISCHES LENKSYSTEM FÜR FAHRZEUG
SYSTÈME DE DIRECTION AUTOMATIQUE INTÉGRÉ POUR VÉHICULE

(30) Priority: 25.01.2017 US 201762450491 P
(43) Date of publication of application: 04.12.2019
(73) Proprietor: AgJunction LLC, Scottsdale, AZ 80023 (US)
(72) Inventor: TAN, Jim, Hiawatha, KS 66434 (US); JOUGHIN, Alan, Robert, Hiawatha, KS 66434 (US); EICHNER, Jean-Marie, Hiawatha, KS 66434 (US); SAPILEWSKI, Glen, Hiawatha, KS 66434 (US); RAMM, Andreas, F., Hiawatha, KS 66434 (US); KAL, Husam, Hiawatha, KS 66434 (US)
(74) Representative: Dendorfer, Claus
(86) International application number: PCT/US2018/015003
(87) International publication number: WO 2018/140465

(56) References cited:
- EP-A1- 1 787 889
- CN-U- 203 812 091
- US-A- 4 681 055
- US-A1- 2016 039 454
- US-A1- 2016 214 643
- US-B1- 7 648 004

## Description

### TECHNICAL FIELD

One or more implementations relate generally to an integrated auto steering system for a vehicle.

### BACKGROUND

Electric actuators have been developed for automatically turning a steering wheel of an autonomous vehicle. These systems use electric motors and drive mechanisms to turn the steering wheel through friction wheels, gears, belt drives and direct drive motors installed under the steering wheel.

A quick connect system includes a sleeve concentrically received around a steering shaft of the vehicle and a hub concentrically received around and releasably secured to the sleeve by one or more fasteners. Mating non-rotary interfaces are provided between the shaft and sleeve and the hub and the sleeve when the shaft, sleeve, and hub are concentrically arranged relative to one another. The hub is releasably secured by a number of fasteners to a rotatable output member of an auto-steer motor of the steering wheel system. The steering wheel system includes an auto-steer motor that can be installed on the steering shaft of a vehicle not originally equipped with an auto-steer motor.

Another integrated automatic electrical steering system includes a global navigation satellite system (GNSS) receiver and antenna for determining the vehicle's instantaneous position, a guidance CPU, and an automatic steering subsystem integrated with the vehicle electrical power system. The automatic steering subsystem can be interfaced with the steering column of the vehicle. The steering subsystem mechanically activates the steering column steering the vehicle according to instructions received from the CPU based upon the vehicle position and a predetermined path. An interrupt element, such as a wheel movement sensor or a slip gear, will allow manual steering override of the automatic steering control.

Another hydraulic primary steering system includes a guidance module with a GPS receiver and a microprocessor adapted to process and store global positioning system (GPS) data defining travel paths, which can be associated with a cultivated field in an agricultural vehicle application. An automatic steering module is connected to the guidance module and to a steering valve control block, which provides pressurized hydraulic fluid in parallel with the vehicle primary hydrostatic steering system.

All of these steering actuators need several separate components or housings for GPS data reception, GPS based data control, and a user interface with display and keypad.

US 2016/0039454 A1 discloses a steering controller that can control steering of a vehicle and is suitable for precision farm controlling. The steering controller can rotate the steering shaft of the vehicle to direct the vehicle on a desired path, for example, using a satellite positioning system. Components of the steering controller are environmental protected by a housing. A control module drives the motor based on commands from a guidance module.

US 2016/0214643 A1 discloses a steering actuator system to be mounted to the steering wheel and steering column of a vehicle. The system includes a gear which mounts below the steering wheel, possibly around the steering column of the vehicle. A steering actuator powered by a motor or some other power source is connected to the gear and when activated can actively steer the vehicle. When connected to a guidance system, the vehicle can automatically be guided and steered via the guidance system and the steering actuator system.

US 7,648,004 B1 discloses a control mechanism which is adaptable to a steering wheel of a vehicle. The control mechanism includes components readily installable into the cabin of an existing vehicle and involves elements sandwiching the steering wheel of the vehicle which are operatively mounted to a motoring assembly actuatable by the user of the vehicle.

US Patent 4,681,055 discloses an automatic control system for a craft having a steering wheel connection for manual guidance of the craft, an automatic pilot sensing system connection, and a drive shaft connection for driving the craft's steerage mechanism. The automatic control system is provided with sensing signals for correction of heading by well-known auto pilot.

### SUMMARY

The present invention is defined by the independent claims, taking due account of any element which is equivalent to an element specified in the claims. The dependent claims concern optional elements of some embodiments of the present invention.

### BRIEF DESCRIPTION OF THE DRAWINGS

The included drawings are for illustrative purposes and serve to provide examples of possible structures and operations for the disclosed inventive systems, apparatus, methods and computer-readable storage media. These drawings in no way limit any changes in form and detail that may be made by one skilled in the art without departing from the scope of the disclosed implementations as defined by the appendant claims.
FIG. 1 shows a perspective view of an integrated steering wheel actuator.
FIG. 2 is a perspective view of the steering wheel actuator of FIG. 1 mounted under a steering wheel.
FIG. 3 is a side view of the steering wheel actuator of FIG. 1 mounted under a steering wheel.
FIG. 4 is a top view of the steering wheel actuator of FIG. 1 mounted under a steering wheel.
FIG. 5 is a bottom exploded perspective view of the steering wheel actuator of FIG. 1.
FIG. 6 is a top exploded perspective view of a control system integrated into the steering wheel actuator.
FIG. 7 is a bottom exploded perspective view of the control system and user interface.
FIG. 8A is a top plan view of a printed circuit board for the control system.
FIG. 8B is a bottom plan view of the printed circuit board for the control system.
FIG. 9 is a schematic diagram of the control system.

### DETAILED DESCRIPTION

An all-in-one auto-steer system steers a farm tractor or any other vehicle along a predetermined path. The auto-steer system integrates processing components into a single unit rather than connecting several separate components together with cables. The end result is overall system simplicity, easy installation, and lower overall system cost.

The auto-steer system may include a steering wheel actuator attached to a steering wheel column. The steering wheel actuator includes a gear assembly for turning a steering wheel on the steering wheel column, a motor for rotating the gear assembly, and an enclosure. A control system operates in the enclosure to control the motor and automatically steer the vehicle.

The control system may receive global navigation satellite system (GNSS) signals from a GNSS antenna and GNSS receiver located in the enclosure and automatically steer the vehicle based on the GNSS signals. The control system also may receive inertial measurement unit (IMU) signals from an IMU located in the enclosure and automatically steer the vehicle based on the IMU signals. The control system also may receive user input signals from a user interface located on the enclosure and automatically steer the vehicle based on the user input signals. In other example systems, the user interface, IMU and/or GNSS may be installed externally to the enclosure and main control unit.

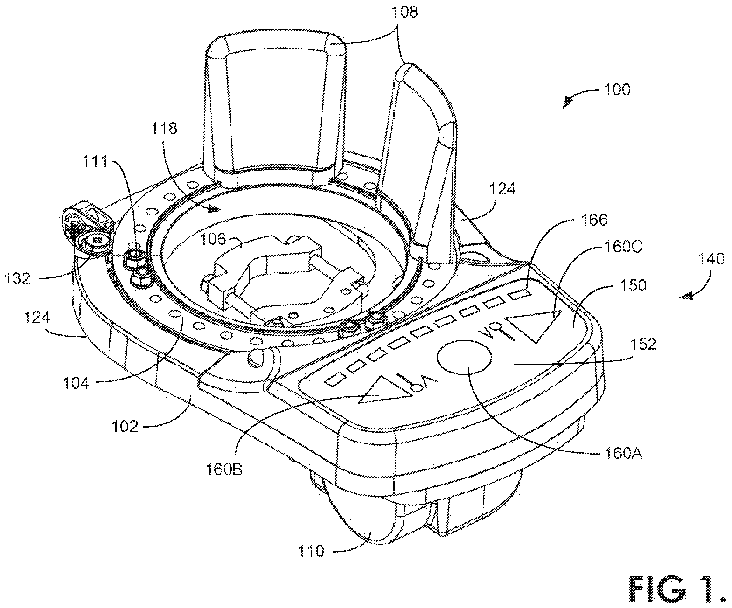

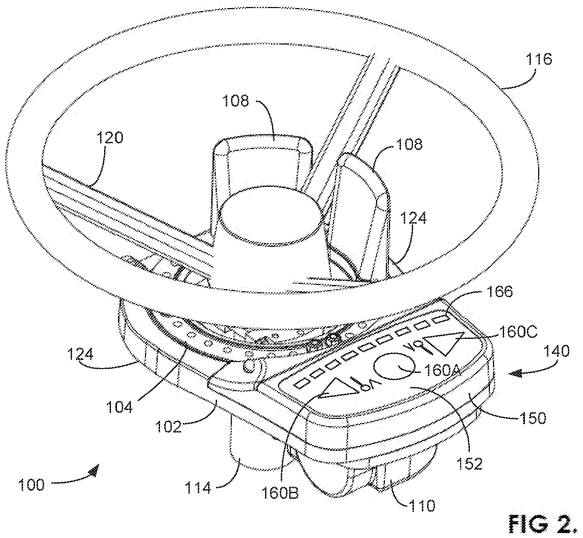

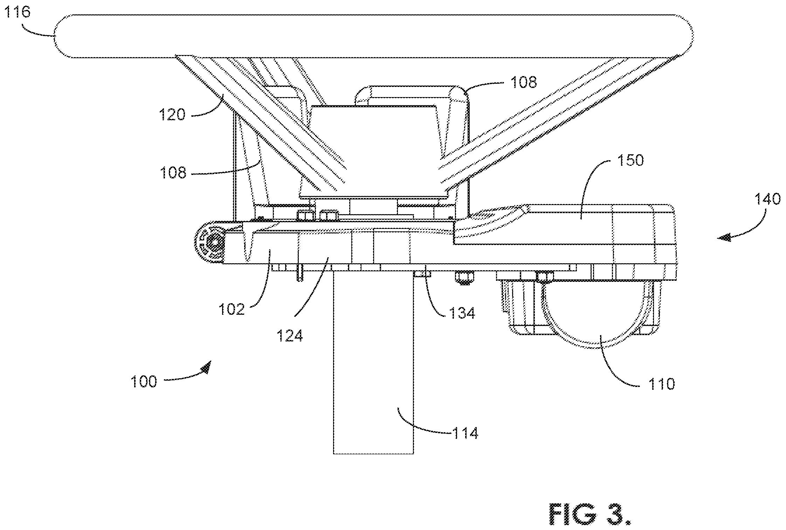

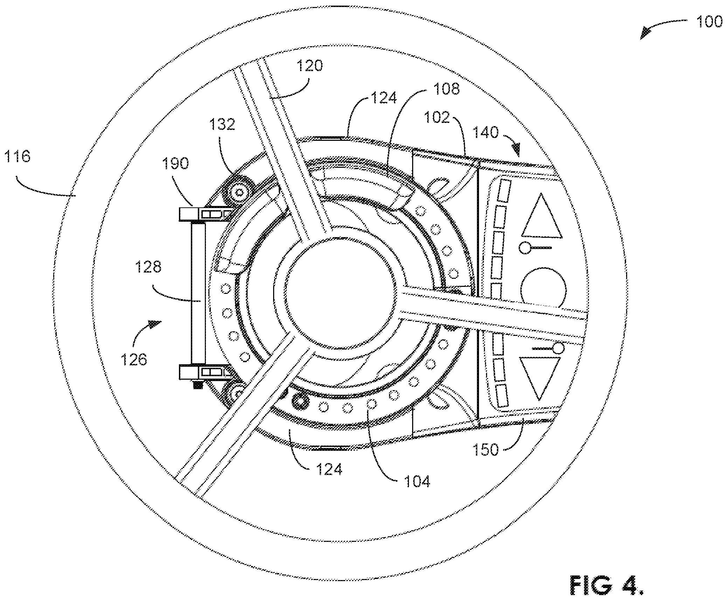

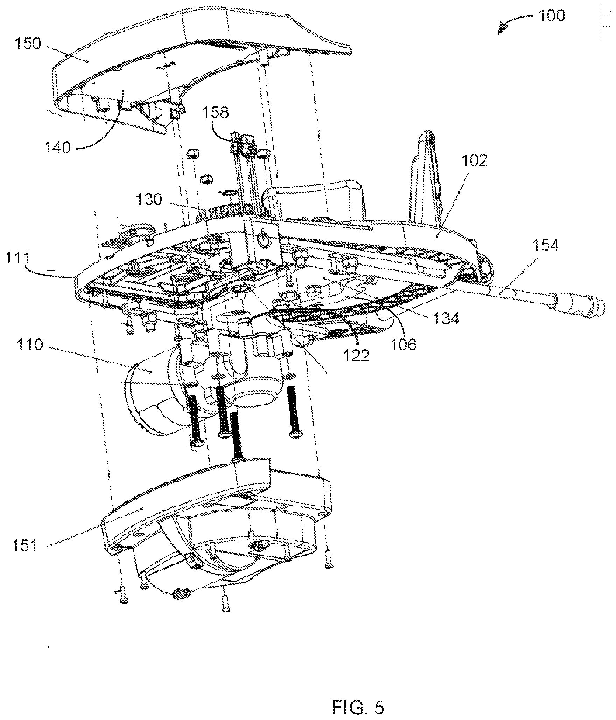

FIG. 1 shows an isolated perspective view of integrated steering actuator 100. FIG. 2 is a perspective view of actuator 100 mounted under steering wheel 116, FIG. 3 is a side view of actuator 100 mounted under steering wheel 116, FIG. 4 is a top view of actuator 100 mounted under steering wheel 116, and FIG. 5 is an exploded bottom perspective view of steering wheel actuator 100.

Referring to FIGS. 1-5, steering wheel actuator 100 includes an annular frame assembly 102 that supports a round rotating gear assembly 104. A clamp 106 may attach to a steering wheel column 114 and hold frame assembly 102 and gear assembly 104 below steering wheel 116. Actuators 108 are bolted to gear assembly 104 and extend vertically up between spokes 120 in steering wheel 116.

An enclosure 150 is integrally formed with frame assembly 102 and also may extend underneath steering wheel 116. Enclosure 150 may house a control system 140 that automatically steers the vehicle containing steering wheel 116. Control system 140 may control a motor 110 that rotates gear assembly 104 causing attached actuators 108 to turn steering wheel 116.

Frame assembly 102 may include oppositely opposing semi-circular arms 124 forming a circular center region 118 and a front opening 126 for receiving steering wheel column 114. A spacer 128 is located in opening 126 in between opposite front ends of arms 124. Gear assembly 104 seats into center region 118 and is rotationally held in-between arms 124 by bearings 132 that are located in four opposing quadrants of frame assembly 102.

Motor 110 may be a DC electric motor that includes a shaft 122 that extends up through a hole formed in a back section 111 of frame assembly 102 and couples to a gear 130. Gear 130 sits in frame assembly section 111 and engages with teeth that extend around the lower outside perimeter of gear assembly 104.

A bracket 134 is bolted to the bottom of frame assembly 102 and attaches to clamp 106. Bracket 134 can be aligned so gear assembly 104 is concentrically aligned with steering wheel column 114. In one example, clamp 106 may be substantially co-planer with teeth in the lower layer of gear assembly 104. Recessing clamp 106 up into opening 130 reduces the overall depth of steering wheel actuator 100.

In one embodiment, actuator 100 is made fully out of plastic to reduce cost. In at least one embodiment, gear assembly 104 consists of a two-piece split design that allows installation without removing steering wheel 116. Operation and assembly of frame assembly 102 and actuators 108 is described in more detail in US Patent 10,384,709, issued August 20, 2019, entitled: ACTUATOR FOR TURNING A STEERING WHEEL IN AUTOMATIC STEERING SYSTEMS.

Gear assembly 104 is just one example drive assembly that may couple motor 110 to an actuator 108 that turns steering wheel 116. It is understood that other types of drive assembly can be used to connect motor 110 to actuator 108 and/or steering wheel 116. For example, motor 110 may be coupled to a belt drive assembly or chain drive assembly that connects to a pulley or sprocket connected to actuators 108 or connected directly to the steering wheel shaft. In another example, the drive assembly may be a direct drive motor coupled directly to the steering wheel or steering wheel shaft.

### Integrated Auto-Steer Control System

Control system 140 includes enclosure 150 that sits over the top of back section 111 and contains electronics and electrical connections for controlling motor 110 and operating a user interface 152. A bottom cover 151 sits over motor 110 and attaches to the back side of frame assembly back section 111. A power and control cable 154 includes the control and power lines used for powering and controlling motor 110 and control system 140. Connectors 158 in cable 154 plug into a printed circuit board contained in enclosure 150 that holds the electrical components of control system 140. Control system 140 contains a central processing unit, a motor controller, an inertial measurement unit (IMU), a global navigation satellite system (GNSS) receiver, and a GNSS antenna all integrated together inside of enclosure 150.

User interface 152 includes a center engage button 160A, a left set A button 160B, a right set B button 160C, and a light bar 166. Integrated buttons 160A-160C and light bar LEDs 166 form a simple user interface 152 for controlling actuator 100. Buttons 160A-160C engage auto-steering, disengage auto-steering, and set the starting point and end point of a new wayline in a field. Light bar 166 may indicate system status, power, error codes, and steering error relative to the desired ideal wayline in the field. The functionally of LEDs in light bar 166 is fully programmable and other modes of operations can be added.

Pressing middle button 160A may engage auto-steering transferring vehicle control to control system 140 so the operator can let go of steering wheel 116. Pressing button 160A again disengages the auto-steering. An operator presses set A button 160B to set the start coordinates for a a desired path for the vehicle (wayline) and presses the set B button 160C to set the ending coordinates of the wayline.

A and B buttons 160B and 160C, respectively, are also used during auto-steer to nudge the vehicle in the left or right direction when the vehicle is drifting off the set wayline. For example, a farm implement may pull the vehicle to the left off of the way line. The operator may press set B button 160C to move the vehicle and towed implement slightly to the right.

The operator may grab the steering wheel at any time to disable auto-steer. For example, at the end of the wayline, the operator may grab the steering wheel and manually perform a U-turn to realign the vehicle with a next row on a field. The operator then presses center engage button 160A to re-engage auto-steer.

Light bar 166 may provide diagnostics identifying power status, GPS status, motor faults, IMU status, etc. Light bar 166 also may indicate how far the vehicle is off the current wayline. For example, light emitting diodes (LEDs) in light bar 166 are activated on the left or right of a center LED to indicate how far the vehicle is off the wayline to the left or right, respectively.

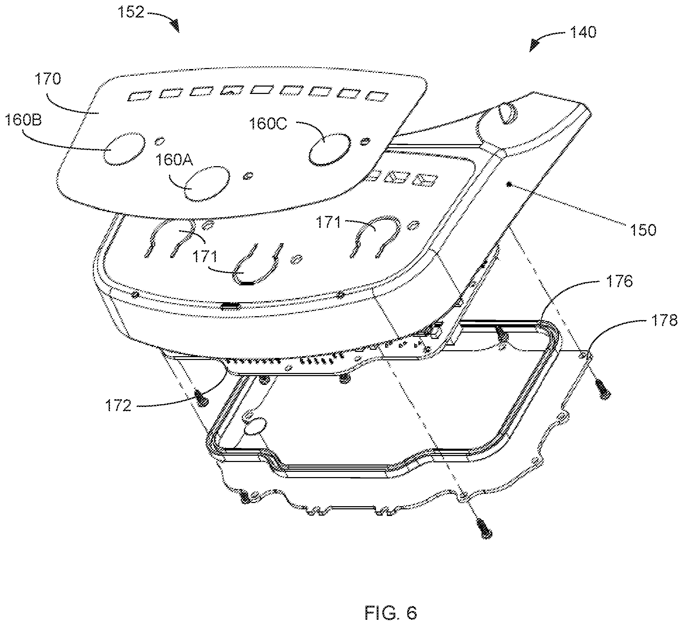

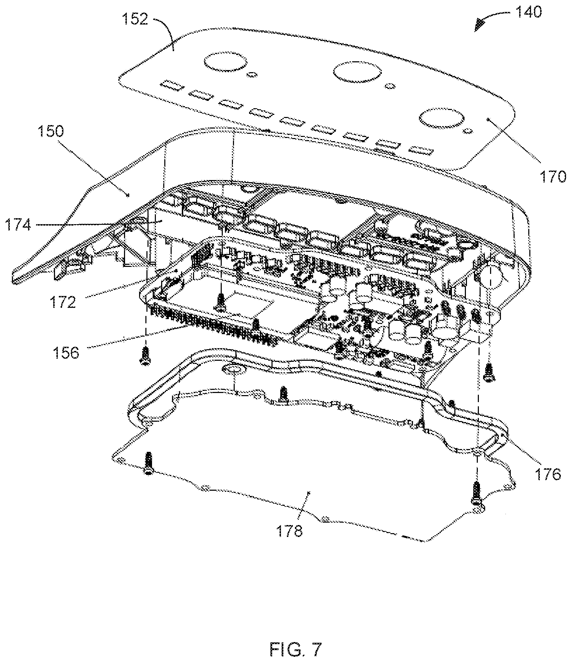

FIG. 6 is an exploded top perspective view of control system 140 and FIG. 7 is an exploded bottom perspective view of control system 140. Referring to FIGS. 6 and 7, in one example, user interface 152 may include a flexible mat or screen 170 that lays on top of button actuators 171 formed on the top surface of enclosure 150. Different locations on mat 170 operate as buttons 160A, 160B, and 160C and are located over associated actuators 171.

A printed circuit board (PCB) 172 seats up inside of a wall 174 that extends down from the top surface of enclosure 150. A gasket 176 is shaped to extend around the perimeter of printed circuit board (PCB) 172 and seat up into a bottom end of wall 174. A cover 178 attaches to enclosure 150 pressing up against gasket 176 and providing a watertight seal around PCB 172. The entire enclosure 150 may be waterproof and drive assembly 104 may be the only exposed moving element.

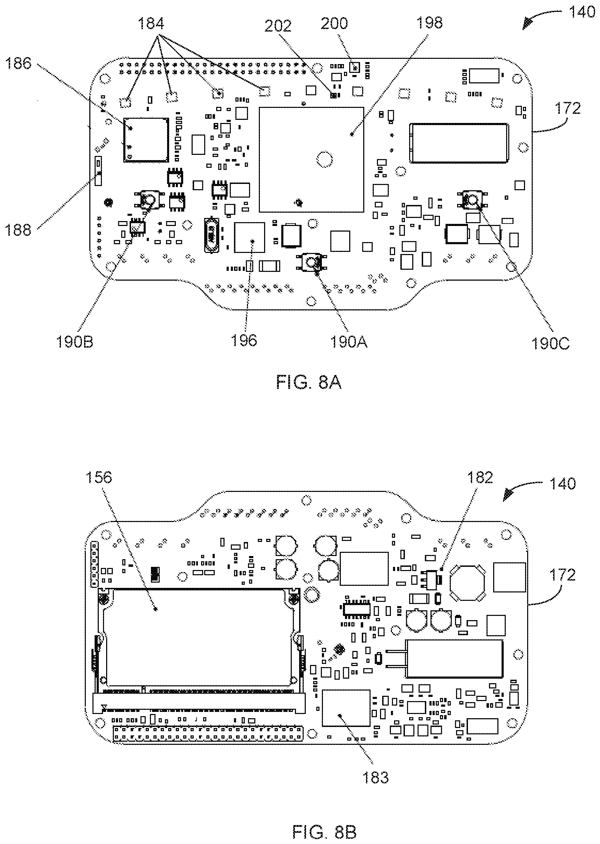

FIG. 8A shows a top plan view of PCB 172 and FIG. 8B shows a bottom plan view of PCB 172. The top side of PCB 172 includes multiple LEDs 184 that form light bar 166 shown above in FIG. 1. Multiple push button switches 190A, 190B, and 190C are mounted on PCB 172 and activate in response to depressed buttons 160A, 160B, and 160C, respectively, on user interface 152 as shown above in FIG. 6.

Liquid crystal diodes (LCDs), an LCD screen, a touch screen, or any other type of display and input device may be used instead of LEDs 184. Other types of switches or input devices may be used based on the type of user interface. For example, user interface 152 may use a touch screen with capacitive sensors instead of switches 190.

Wi-Fi and Bluetooth^{®} transceivers 186 operate within a same integrated circuit and are coupled to a Wi-Fi and Bluetooth^{®} antenna 188. A GNSS antenna 198 is coupled to a GNSS receiver 183 mounted on the back side of PCB 172. GNSS is alternatively referred to as global positioning system (GPS). An inertial measurement unit (IMU) IC 200 and compass IC 202 are also mounted to the top of PCB 172. IMU 200 may include an integrated accelerometer and gyroscope. A power conditioning circuit 182 generates, conditions, and filters the voltages used by the ICs mounted on PCB 172.

Control unit 156 is connected to substantially all of the ICs on PCB 172 and is alternatively referred to as a main central processing unit (CPU). CPU 156 operates as a steering controller for automatically steering the vehicle based on a stored destination path, and inputs from GNSS receiver 183, compass 202, IMU 200, Bluetooth/Wi-Fi 186, and push button switches 190A, 190B, and 190C. Control unit 156 sends commands to a motor controller 196 for controlling motor 110 and steering wheel 116. The CPU 156 may use control software to determine the vehicle position for controlling the motor and automatically steering the vehicle.

Steering control systems that automatically steer vehicles using GPS/IMU technology over defined paths are described in US Patent 7,142,956, issued November 28, 2006, entitled: AUTOMATIC STEERING SYSTEM AND METHOD; US Patent 7,689,354, issued March 30, 2010, entitled ADAPTIVE GUIDANCE SYSTEM AND METHOD; US Patent 7,835,832, November 16, 2010, entitled: VEHICLE CONTROL SYSTEM; and US Patent 7,437,230, issued October 14, 2008, entitled: SATELLITE BASED VEHICLE GUIDANCE CONTROL IN STRAIGHT AND CONTOUR MODES.

Normally a user interface is a separate expensive touchscreen display connected by cables to the steering wheel actuator. Electronic control units (ECUs) with inertial sensors are also usually sold as a separate expensive devices that connect to steering actuators with electrical harnesses.

Control system 140 and user interface 152 are uniquely integrated into steering wheel actuator 100 to achieve a lower overall system cost. Control system 140 uses a same enclosure 150 to hold CPU 156, GNSS receiver 183, and the accelerometers and gyros of IMU 200 used for terrain compensation and closed loop steering control. Control system 140 integrates the ECU/steering controller 156 into steering actuator 100 providing an easy to install and use cost effective design.

In one example, control system 140 is integrated on a single PCB 172. In other examples, multiple PCBs located within enclosure 150 may retain different components of control system 140. Other components of actuator 100 are connected to PCB 172 via wires, cables or alternative physical attachments.

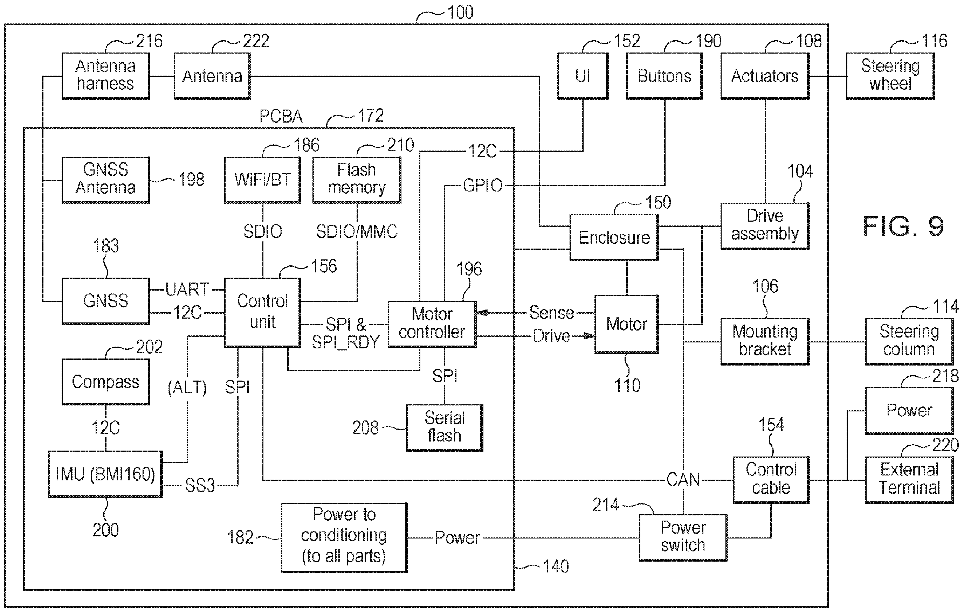

FIG. 9 is a schematic diagram showing how different devices in steering wheel actuator 100 are connected together on a vehicle. As described above, steering wheel actuator 100 includes a mounting bracket and clamp 106 that attaches enclosure 150 to steering column 114. Actuators 108 are connected to drive assembly 104 and extend up in-between the spokes of steering wheel 116 to steer the vehicle. As explained above, drive assembly 104 may be a gear assembly, belt drive assembly, chain drive assembly, or a direct dive motor.

Control and power cable 154 in actuator 100 is coupled to a power supply 218, such as the vehicle battery. Control cable 154 may include a wiring harness that runs down steering column 114 to the vehicle floorboard to connect to an external terminal 220. A power switch 214 connects power from control cable 154 to power conditioning circuit 182 located on PCB 172.

Enclosure 150 retains control system 140, and buttons 190 of user interface 152. Enclosure 150 also may retain motor 110 and power switch 214. Enclosure 150 is also attached via frame assembly 102 in FIG. 1 to mounting bracket 106, gear assembly 104, actuators 108, and control cable 154 as shown above.

Control unit 156 receives position, speed, heading, yaw, roll, pitch, etc. from GNSS receiver 183, compass 202, and IMU 200. GNSS antenna 198 is connected to GNSS receiver 183 and is mounted directly on PCB 172. Mounting GNSS antenna 198 on PCB 172 may improve strength of GNSS signals received by GNSS receiver 183. An antenna harness 216 may connect an external antenna 222 located outside of enclosure 150 to GNSS receiver 183.

Control unit 156 may store configuration data, location data, and selected waylines in Flash memories 210 and 208. Control unit 156 reads the position and heading data from GNSS receiver 183, compass 202, and IMU 200 and reads the wayline coordinates in memories 210 and 208 to determine where the vehicle is currently located and where the vehicle needs to be located. Control unit 156 sends signals to motor controller 196 to turn the vehicle to the right or left based on the current vehicle location relative to the stored wayline.

Motor controller 196 controls motor 110 and actuates the LEDs in user interface 152 based on inputs received from buttons 190 and the inputs received from control unit 156. In a simplified configuration, motor 110 and user interface 152 may be operated only by motor controller 196 without the auto-steer functionality provided by control unit 156. Control unit 156 also may be controlled by a wireless device, such as a smart phone, IPAD, PC, etc. via Wi-Fi/Bluetooth^{®} transceivers 186.

Thus, auto-steer components are integrated into a same enclosure 150 within steering wheel actuator 100. For example, GNSS antenna 198, GNSS receiver 183, IMU 200, control unit 156, and user interface 152 are all located within enclosure 150 mounted on steering column 114 instead of in separate enclosures located on separate vehicle locations. Thus, steering wheel actuator 100 with integrated control system 140 provides a complete auto-steer system that is less expensive to manufacture and easier to install.

For the sake of convenience, operations may be described as various interconnected or coupled functional blocks or diagrams. However, there may be cases where these functional blocks or diagrams may be equivalently aggregated into a single logic device, program or operation with unclear boundaries.

Some of the operations described above may be implemented in software and other operations may be implemented in hardware. One or more of the operations, processes, or methods described herein may be performed by an apparatus, device, or system similar to those as described herein and with reference to the illustrated figures.

It will be apparent to one skilled in the art that the disclosed implementations may be practiced without some or all of the specific details provided. In other instances, certain process or methods also referred to herein as "blocks," have not been described in detail in order to avoid unnecessarily obscuring the disclosed implementations. Other implementations and applications also are possible, and as such, the following examples should not be taken as definitive or limiting either in scope or setting.

References have been made to accompanying drawings, which form a part of the description and in which are shown, by way of illustration, specific implementations. Although these disclosed implementations are described in sufficient detail to enable one skilled in the art to practice the implementations, it is to be understood that these examples are not limiting, such that other implementations may be used and changes may be made to the disclosed implementations without departing from the scope of the claims. For example, the blocks of the methods shown and described are not necessarily performed in the order indicated in some other implementations.

Having described and illustrated the principles of a preferred embodiment, it should be apparent that the embodiments may be modified in arrangement and detail without departing from such principles. Claim is made to all modifications and variation coming within the scope of the following claims.

## Claims

1. A steering wheel actuator (100) for mounting on a steering wheel column (114) and turning a steering wheel (116) of a vehicle, comprising:
an enclosure (150) formed onto the steering wheel actuator (100);
a central processing unit, CPU (156), located in the enclosure (150), configured to automatically steer the vehicle; and
a user interface (152), located on the enclosure (150), configured to control the CPU (156), the user interface (152) operably coupled to the CPU (156) to control engagement and disengagement of auto-steering by the steering wheel actuator (100), set starting and ending points for a wayline, and display a steering error relative to the wayline,
wherein the user interface (152) includes:
a touch screen or another type of display and input device, or
a display device and an input device, wherein the display device comprises LEDs (166), liquid crystal diodes, or an LCD screen.

2. The steering wheel actuator (100) of claim 1, further comprising:
a global navigation satellite system, GNSS, antenna (198) located in the enclosure (150); and
a GNSS receiver (183) located in the enclosure (150) and coupled to the GNSS antenna (198) and the CPU (156).

3. The steering wheel actuator (100) of claim 2, further comprising an inertial measurement unit, IMU (200), including an accelerometer and a gyroscope located in the enclosure (150) and coupled to the CPU (156).

4. The steering wheel actuator (100) of claim 3, wherein the CPU (156), GNSS antenna (198), GNSS receiver (183), and IMU (200) are all mounted on one or more printed circuit boards (172) located in the enclosure (150).

5. The steering wheel actuator (100) of any of claims 1-3, wherein the user interface (152) includes the display device and the input device, wherein the input device comprises switches (190A-C) which activate in response to depressed buttons (160A-C).

6. The steering wheel actuator (100) of claim 5, wherein the controlled engagement and disengagement of auto-steering is engagement and disengagement of the steering wheel actuator (100) with a steering wheel (116), and wherein the user interface (152) includes a mat or screen (170) located on a top face of the enclosure (150).

7. The steering wheel actuator (100) of any of claims 1-6, further comprising:
a frame assembly (102) that attaches around the steering wheel column (114);
a drive assembly (104) that rotates within the frame assembly (102);
a motor (110) configured to rotate the drive assembly (104) based on control signals generated by the CPU (156) and user interface (152).

8. The steering wheel actuator (100) of claim 7, further comprising a motor controller (196) located in the enclosure (150) and coupled between the CPU (156) and the motor (110), the motor controller (196) configured to send control signals to the motor (110) based on the control signals generated by the CPU (156) and the user interface (152).

9. The steering wheel actuator (100) of claim 7, wherein the enclosure (150) extends back from the frame assembly (102) underneath the steering wheel (116).

10. The steering wheel actuator (100) of claim 8, wherein the enclosure (150) extends from the frame assembly (102) and contains one or more printed circuit boards (172) coupled to the user interface (152) and motor controller (196).

11. The steering wheel actuator (100) of any of claims 7-10, wherein the drive assembly (104) includes at least one of a gear assembly, belt drive assembly, chain drive assembly, or direct dive motor.

12. The steering wheel actuator (100) of any of claims 1-11, including a wireless transceiver (186) for wireless communication with an external device.

13. The steering wheel actuator (100) of claim 12, wherein the wireless transceiver (186) comprises a WiFi, Bluetooth, or cellular phone transceiver.

14. A method for steering a vehicle, comprising:
attaching a steering wheel actuator (100) according to any of claims 1-6 to a steering wheel column (114), the steering wheel actuator (100) including a motor (110) for rotating the steering wheel (116); and
operating a control system (140) in the enclosure (150) to control the motor (110) and automatically steer the vehicle.

15. The method of claim 14, wherein the steering wheel actuator (100) includes a drive assembly (104) coupled to the motor (110) for rotating the steering wheel (116).

## Patentansprüche

1. Lenkrad-Betätigungseinrichtung (100) zur Montage an einer Lenkradsäule (114) und zum Drehen eines Lenkrads (116) eines Fahrzeugs, umfassend:
ein Gehäuse (150), das an der Lenkrad-Betätigungseinrichtung (100) ausgebildet ist;
eine zentrale Verarbeitungseinheit, CPU (156), die in dem Gehäuse (150) angeordnet ist, und die zum automatischen Lenken des Fahrzeugs eingerichtet ist; und
eine Benutzerschnittstelle (152), die an dem Gehäuse (150) angeordnet ist, und die zum Bedienen der CPU (156) eingerichtet ist, wobei die Benutzerschnittstelle (152) betriebsmäßig mit der CPU (156) gekoppelt ist, um ein Aktivieren und Deaktivieren eines automatischen Lenkens durch die Lenkrad-Betätigungseinrichtung (100) zu steuern, Start- und Endpunkte für eine Fahrspur zu setzen, und einen Lenkfehler im Hinblick auf die Fahrspur anzuzeigen,
wobei die Benutzerschnittstelle (152) aufweist:
einen Touchscreen oder eine andere Art von Anzeige- und Eingabeeinrichtung, oder
eine Anzeigeeinrichtung und eine Eingabeeinrichtung, wobei die Anzeigeeinrichtung LEDs (166), Flüssigkristalldioden oder einen LCD-Bildschirm umfasst.

2. Lenkrad-Betätigungseinrichtung (100) nach Anspruch 1, ferner umfassend:
eine GNSS-Antenne (198) (GNSS = *Global Navigation Satellite System* = globales Satellitennavigationssystem), die in dem Gehäuse (150) angeordnet ist; und
einen GNSS-Empfänger (183), der in dem Gehäuse (150) angeordnet ist und der mit der GNSS-Antenne (198) und der CPU (156) gekoppelt ist.

3. Lenkrad-Betätigungseinrichtung (100) nach Anspruch 2, der ferner eine Trägheitsmesseinheit, IMU (200) (GNSS = *Inertial Measurement Unit*)*,* umfasst, die einen Beschleunigungsmesser und ein Gyroskop aufweist, welche in dem Gehäuse (150) angeordnet und mit der CPU (156) gekoppelt sind.

4. Lenkrad-Betätigungseinrichtung (100) nach Anspruch 3, wobei die CPU (156), die GNSS-Antenne (198), der GNSS-Empfänger (183) und die IMU (200) alle auf einer oder mehreren gedruckten Leiterplatten (172) montiert sind, die in dem Gehäuse (150) angeordnet ist/sind.

5. Lenkrad-Betätigungseinrichtung (100) nach einem der Ansprüche 1-3, wobei die Benutzerschnittstelle (152) die Anzeigeeinrichtung und die Eingabeeinrichtung aufweist, wobei die Eingabeeinrichtung Schalter (190A-C) umfasst, die ansprechend auf gedrückte Druckknöpfe (160A-C) aktiviert werden.

6. Lenkrad-Betätigungseinrichtung (100) nach Anspruch 5, wobei das gesteuerte Aktivieren und Deaktivieren des automatischen Lenkens ein In-Wirkverbindung-Bringen und Außer-Wirkverbindung-Bringen der Lenkrad-Betätigungseinrichtung (100) mit einem Lenkrad (116) ist, und wobei die Benutzerschnittstelle (152) eine Platte oder einen Bildschirm (170) umfasst, die/der auf einer oberen Fläche des Gehäuses (150) angeordnet ist.

7. Lenkrad-Betätigungseinrichtung (100) nach einem der Ansprüche 1-6, ferner umfassend:
eine Rahmenbaugruppe (102) zum Anbringen um die Lenkradsäule (114) herum;
eine Antriebsbaugruppe (104), die sich in der Rahmenbaugruppe (102) dreht;
einen Motor (110), der eingerichtet ist, die Antriebsbaugruppe (104) beruhend auf Steuersignalen, die von der CPU (156) und der Benutzerschnittstelle (152) erzeugt werden. zu drehen.

8. Lenkrad-Betätigungseinrichtung (100) nach Anspruch 7, ferner eine Motorsteuerung (196) aufweisend, die in dem Gehäuse (150) angeordnet und zwischen die CPU (156) und den Motor (110) geschaltet ist, wobei die Motorsteuerung (196) eingerichtet ist, Steuersignale an den Motor (110) beruhend auf den von der CPU (156) und der Benutzerschnittstelle (152) erzeugten Steuersignalen zu senden.

9. Lenkrad-Betätigungseinrichtung (100) nach Anspruch 7, wobei sich das Gehäuse (150) von der Rahmenbaugruppe (102) unterhalb des Lenkrads (116) nach hinten erstreckt.

10. Lenkrad-Betätigungseinrichtung (100) nach Anspruch 8, wobei sich das Gehäuse (150) von der Rahmenbaugruppe (102) aus erstreckt und eine oder mehrere gedruckte Leiterplatten (172) enthält, die mit der Benutzerschnittstelle (152) und der Motorsteuerung (196) gekoppelt ist/sind.

11. Lenkrad-Betätigungseinrichtung (100) nach einem der Ansprüche 7-10, wobei die Antriebsbaugruppe (104) mindestens eines der folgenden Elemente aufweist: eine Getriebebaugruppe, eine Riemenantriebsbaugruppe, eine Kettenantriebsbaugruppe, oder einen direkt antreibenden Motor.

12. Lenkrad-Betätigungseinrichtung (100) nach einem der Ansprüche 1-11, die einen drahtlosen Sender/Empfänger (186) zur drahtlosen Kommunikation mit einem externen Gerät aufweist.

13. Lenkrad-Betätigungseinrichtung (100) nach Anspruch 12, wobei der drahtlose Sender/Empfänger (186) einen WiFi-, Bluetooth- oder Mobiltelefon-Sender/Empfänger umfasst.

14. Verfahren zum Lenken eines Fahrzeugs, umfassend:
Anbringen einer Lenkrad-Betätigungseinrichtung (100) nach einem der Ansprüche 1-6 an einer Lenkradsäule (114), wobei die Lenkrad-Betätigungseinrichtung (100) einen Motor (110) zum Drehen des Lenkrads (116) aufweist; und
Betreiben eines Steuersystems (140) in dem Gehäuse (150), um den Motor (110) zu steuern und das Fahrzeug automatisch zu lenken.

15. Verfahren nach Anspruch 14, wobei die Lenkrad-Betätigungseinrichtung (100) eine mit dem Motor (110) gekoppelte Antriebsbaugruppe (104) zum Drehen des Lenkrads (116) aufweist.

## Revendications

1. Actionneur de volant (100) destiné à être monté sur une colonne de direction (114) et à faire tourner un volant (116) d'un véhicule, comprenant :
une enceinte (150) formée sur l'actionneur de volant (100) ;
une unité centrale de traitement, CPU (156), située dans l'enceinte (150), configurée pour diriger automatiquement le véhicule ; et
une interface utilisateur (152), située sur l'enceinte (150), configurée pour commander la CPU (156), l'interface utilisateur (152) étant couplée de manière fonctionnelle à la CPU (156) pour commander l'engagement et le désengagement de la direction automatique par l'actionneur de volant (100), définir des points de départ et d'arrivée pour un itinéraire trajet, et afficher une erreur de direction par rapport à l'itinéraire,
l'interface utilisateur (152) comprenant :
un écran tactile ou un autre type de dispositif d'affichage et d'entrée, ou
un dispositif d'affichage et un dispositif d'entrée, le dispositif d'affichage comprenant des DEL (166), des diodes à cristaux liquides ou un écran LCD.

2. Actionneur de volant (100) selon la revendication 1, comprenant en outre :
une antenne de système mondial de navigation par satellite, GNSS, (198) située dans l'enceinte (150) ; et
un récepteur GNSS (183) situé dans l'enceinte (150) et couplé à l'antenne GNSS (198) et à la CPU (156).

3. Actionneur de volant (100) selon la revendication 2, comprenant en outre une unité de mesure inertielle, IMU (200), comprenant un accéléromètre et un gyroscope situés dans l'enceinte (150) et couplés à la CPU (156).

4. Actionneur de volant (100) selon la revendication 3, dans lequel la CPU (156), l'antenne GNSS (198), le récepteur GNSS (183) et l'IMU (200) sont tous montés sur une ou plusieurs cartes de circuits imprimés (172) situées dans l'enceinte (150).

5. Actionneur de volant (100) selon l'une quelconque des revendications 1 à 3, dans lequel l'interface utilisateur (152) comprend le dispositif d'affichage et le dispositif d'entrée, le dispositif d'entrée comprenant des commutateurs (190A-C) qui s'activent en réponse à des boutons enfoncés (160A-C).

6. Actionneur de volant (100) selon la revendication 5, dans lequel l'engagement et le désengagement commandés de la direction automatique sont un engagement et un désengagement de l'actionneur de volant (100) avec un volant (116), et dans lequel l'interface utilisateur (152) comprend un tapis ou écran (170) situé sur une face supérieure de l'enceinte (150).

7. Actionneur de volant (100) selon l'une quelconque des revendications 1 à 6, comprenant en outre :
un ensemble cadre (102) qui se fixe autour de la colonne de direction (114) ;
un ensemble d'entraînement (104) qui tourne à l'intérieur de l'ensemble cadre (102) ;
un moteur (110) configuré pour faire tourner l'ensemble d'entraînement (104) sur la base de signaux de commande générés par la CPU (156) et l'interface utilisateur (152).

8. Actionneur de volant (100) selon la revendication 7, comprenant en outre un contrôleur de moteur (196) situé dans l'enceinte (150) et couplé entre la CPU (156) et le moteur (110), le contrôleur de moteur (196) étant configuré pour envoyer des signaux de commande au moteur (110) sur la base des signaux de commande générés par la CPU (156) et l'interface utilisateur (152).

9. Actionneur de volant (100) selon la revendication 7, dans lequel l'enceinte (150) s'étend vers l'arrière à partir de l'ensemble cadre (102) sous le volant (116).

10. Actionneur de volant (100) selon la revendication 8, dans lequel l'enceinte (150) s'étend à partir de l'ensemble cadre (102) et contient une ou plusieurs cartes de circuits imprimés (172) couplées à l'interface utilisateur (152) et au contrôleur de moteur (196).

11. Actionneur de volant (100) selon l'une quelconque des revendications 7 à 10, dans lequel l'ensemble d'entraînement (104) comprend au moins un parmi un ensemble engrenage, un ensemble d'entraînement par courroie, un ensemble d'entraînement par chaîne ou un moteur à entraînement direct.

12. Actionneur de volant (100) selon l'une quelconque des revendications 1 à 11, comprenant un émetteur-récepteur sans fil (186) pour communication sans fil avec un dispositif externe.

13. Actionneur de volant (100) selon la revendication 12, dans lequel l'émetteur-récepteur sans fil (186) comprend un émetteur-récepteur WiFi, Bluetooth ou à téléphone cellulaire.

14. Procédé pour diriger un véhicule, comprenant :
fixer un actionneur de volant (100) selon l'une quelconque des revendications 1 à 6 à une colonne de direction (114), l'actionneur de volant (100) comprenant un moteur (110) pour faire tourner le volant (116) ; et
faire fonctionner un système de commande (140) dans l'enceinte (150) pour commander le moteur (110) et diriger automatiquement le véhicule.

15. Procédé selon la revendication 14, dans lequel l'actionneur de volant (100) comprend un ensemble d'entraînement (104) couplé au moteur (110) pour faire tourner le volant (116).
